# EUROPEAN PATENT SPECIFICATION

(11) **EP 2 644 302 B1**
(45) Date of publication and mention of the grant of the patent: **27.12.2017**
(21) Application number: 12162051.2
(22) Date of filing: 29.03.2012
(51) Int. Cl.: B23C 5/10

(54) **Rotary cutting tool and method of making a rotary cutting tool**
Drehschneidwerkzeug und Verfahren zur Herstellung eines Drehschneidwerkzeugs
Outil de coupe rotatif et procédé de fabrication d'un outil de coupe rotatif

(43) Date of publication of application: 02.10.2013
(73) Proprietor: SECO TOOLS AB (publ), 737 82 Fagersta (SE)
(72) Inventor: Gardner, Eric, Troy, MI Michigan MI 48098 (US)
(74) Representative: Klöfver, Jörgen

(56) References cited:
- US-A- 938 434
- US-A- 4 448 120
- US-A1- 2003 059 263
- US-B1- 8 021 085

## Description

### BACKGROUND AND SUMMARY

The present invention relates generally to rotary cutting tools and, more particularly, to rotary tools of the type typically used for engraving or milling small, complicated shapes.

More particularly the present invention relates to a rotary cutting tool and a method of making a rotary cutting tool according to the preambles of claims 1 and 11 respectively. Such a tool and a method are known from US 938 434 A.

To machine very small, complicated, often three dimensional (3D) shapes, it is known to use rotating tools that are sometimes referred to as pyramid-shaped tools. U.S. Patent No. 4,448,120 discloses an illustrative pyramid-shaped tool in which the tip of an engraving element is formed in the shape of a pyramid. Multiple facets are ground to a point on the end of the tool. As explained in U.S. Patent No. 8,021,085, in such a tool, there is no relief on the backside of the cutting edges so the tool doesn't actually cut or scoop any material from the workpiece while it is cutting but instead pushes a burr up during the cut. This burr is undesirable and produces a jagged looking line. Since there are no actual cutting edges on this tool, it has a tendency to chip easily and the tips break off.

While some small rotary cutting tools try to provide cutting edges and flutes, a common problem in these tools is that they break easily. Because of their very small diameter, providing conventional flutes or cutting edges on tools tends to weaken them.

It is desirable to provide a rotary cutting tool, particularly one useful for machining very small, complicated shapes, that provides a strong cutting edge and provides a means for removal of chips from a workpiece.

In accordance with an aspect of the present invention, a rotary cutting tool comprises a generally cylindrical body, at least four substantially flat surfaces that each form an angle with a longitudinal axis of the body, and a cutting tip centered on the longitudinal axis, the at least four surfaces intersecting with the tip, the tip defining at least two, curved cutting edges with a radially negative rake angle and an axially negative rake angle. According to another aspect of the invention, a method of making a rotary cutting tool comprises forming on a cylindrical body at least four substantially flat surfaces that each form an angle with a longitudinal axis of the body, and forming a cutting tip centered on the longitudinal axis, the at least four surfaces intersecting with the tip, the tip defining at least two, curved cutting edges with a radially negative rake angle and an axially negative rake angle.

### BRIEF DESCRIPTION OF THE DRAWINGS

The features and advantages of the present invention are well understood by reading the following detailed description in conjunction with the drawings in which like numerals indicate similar elements and in which:
FIGS. 1A and 1B are side and end views of a cutting tool according to an aspect of the present invention;
FIGS. 2A and 2B are side views of the tip of a cutting tool according to FIGS. 1A and 1B, the view of FIG. 2B being rotated 90° about the longitudinal axis of the cutting tool from the view of FIG. 2A;
FIG. 2C is an enlarged view of a portion of FIG. 1B;
FIG. 3A is a perspective view of a tip of a cutting tool according to an aspect of the present invention, and FIG. 3B is an enlarged view of a portion of the tip of FIG. 3A;
FIG. 4A is a perspective view of a tip of a cutting tool according to an aspect of the present invention taken at a different angle from the perspective view of FIG. 3A, and FIG. 4B is an enlarged view of a portion of the tip of FIG. 4A; and
FIGS. 5A-5D show steps in the manufacture of a cutting tool according to an aspect of the present invention.

### DETAILED DESCRIPTION

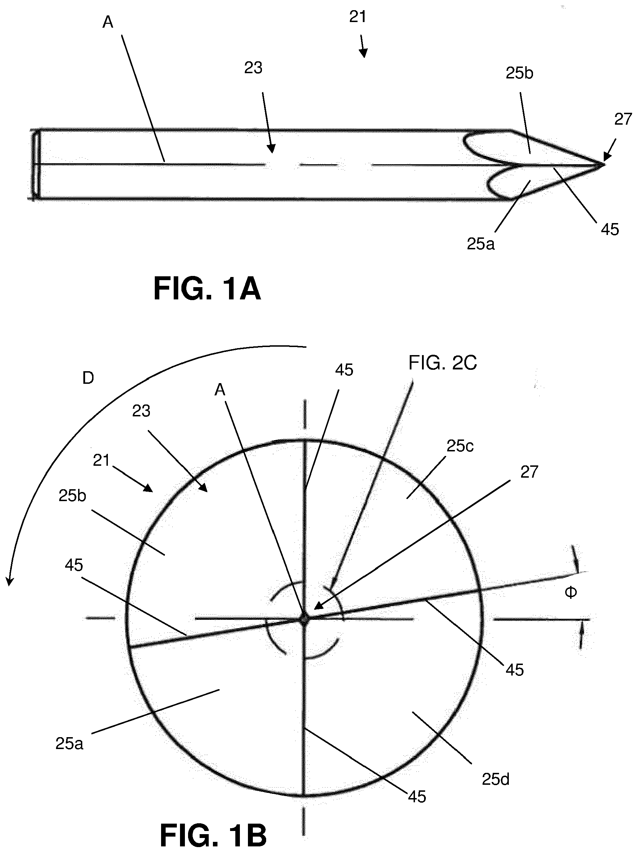

A rotary cutting tool 21 according to an aspect of the present invention is shown in FIGS. 1A and 1B. The tool 21 comprises a generally cylindrical body 23. Ordinarily, the body 23 is circularly cylindrical and has a diameter of between 3-6 mm, however, the body need not be circularly cylindrical and may be larger or smaller than 3-6 mm. The body 23 will ordinarily have a length of about 40-60 mm, most preferably about 50 mm. The body 23 may, for example, by generally square, and may increase or decrease in width or diameter over some or all of its length.

The tool 21 includes at least four substantially flat surfaces 25a-25d that each form an angle with a longitudinal axis A of the body.

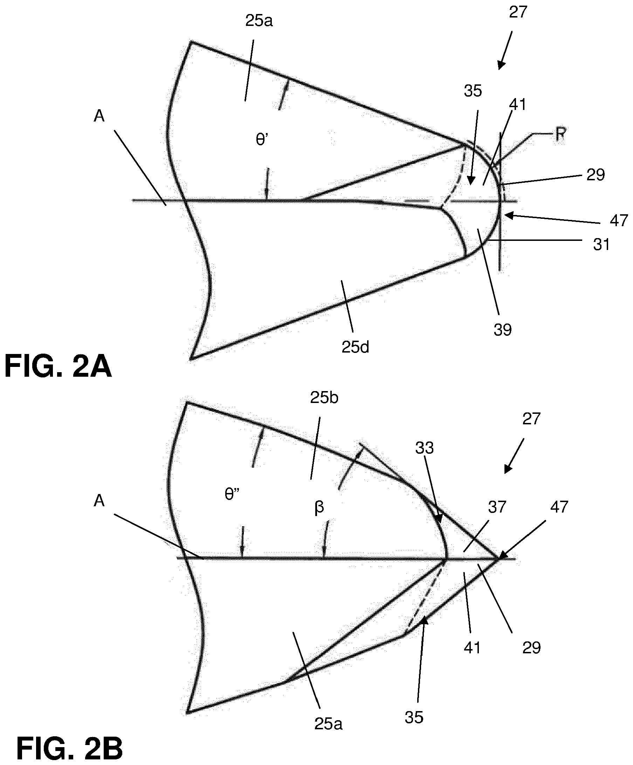

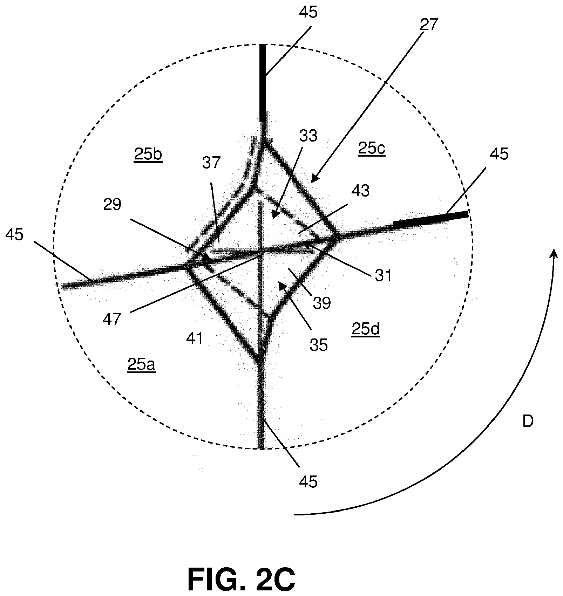

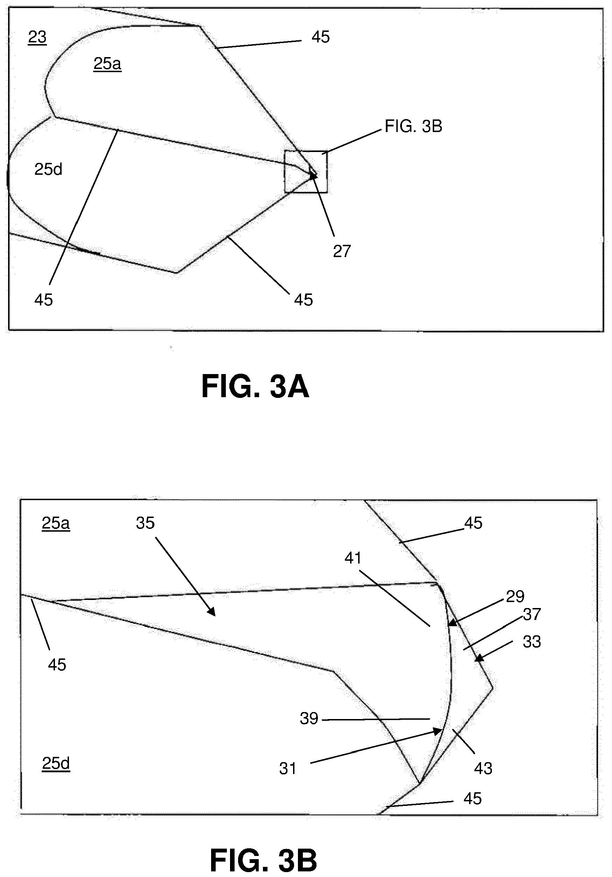

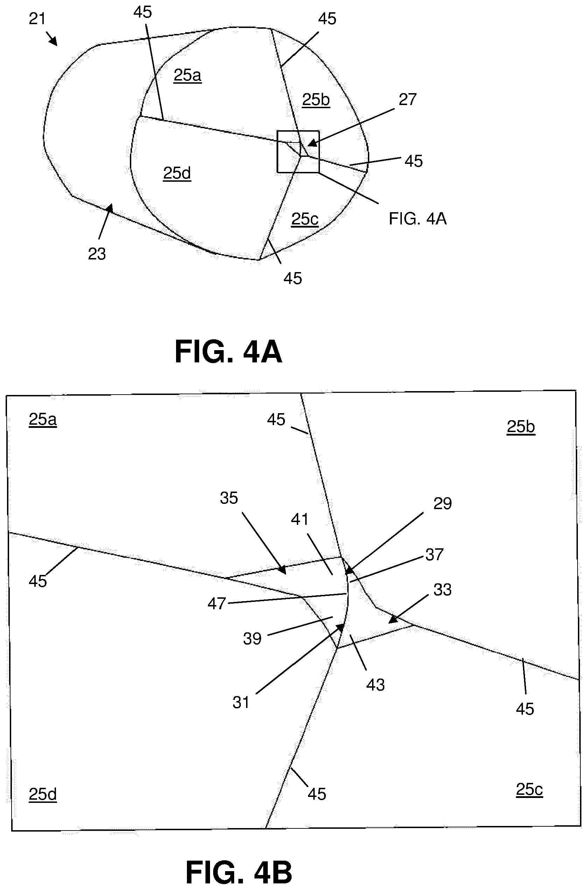

The tool 21 further comprises a cutting tip 27 centered on the longitudinal axis A. As seen in FIGS. 2A-4B, the at least four surfaces 25a-25d intersect with the tip 27. The tip 27 defines at least two cutting edges 29 and 31. The tool 21 is intended to rotate in the direction D shown in FIGS. 1B and 2C. Details of the tip 27 are shown in perspective in FIGS. 3B and 4B.

The tip 27 includes a surface having a non-zero area, i.e. larger than a point. Ordinarily, the tip 27 comprises at least two surface portions 33 and 35, the at least two surface portions meeting at a forward-most end 47 of the tip 27 and defining the at least two cutting edges 29 and 31. Ordinarily, at least parts of the surface portions 33 and 35 are convex.

Ordinarily, at least parts of the at least two cutting edges 29 and 31 are curved or radiused with a radius R as seen in the side view of FIG. 2A. A presently preferred radius is 0.152 mm ± 0.005 mm. The at least two cutting edges 29 and 31 can meet at the longitudinal axis A of the body 23. When the tip 27 is viewed in FIG. 2B at 90° to the view of FIG. 2A, the surface portions 33 and 35 can appear to extend straight down from the longitudinal axis A at an angle. In the illustrated embodiment, the surface portions 33 and 35 each form an angle β of 40° to the longitudinal axis A in the view of FIG. 2B.

Rake surface portions 37 and 39 associated with each cutting edge 29 and 31 will ordinarily define a negative axial rake angle and a negative radial rake angle with a workpiece (not shown) or the surface defined by rotation of the cutting edges 29 and 31 about the longitudinal axis A. The tip 27 is shaped so that it has relatively large wedge angles at the cutting edges 29 and 31 and negative axial and radial rake angles, which can result in a stronger, longer-lasting tool. Clearance surface portions 41 and 43 of the surface portions 33 and 35 are disposed on opposite sides of the cutting edges 29 and 31 from the rake surface portions 37 and 39.

As seen in FIG. 2C, the at least two cutting edges 29 and 31 and their respective surface portions 33 and 35 are ordinarily rotationally symmetrical and/or identical on opposite sides of the longitudinal axis A.

Of the at least four surfaces 25a-25d, at least two non-consecutive ones 25a and 25c form different, usually larger, angles θ' with the longitudinal axis A than the angles θ" of the at least two other non-consecutive ones 25b and 25d of the at least four surfaces. The angles θ' and θ" are measured from the same point on the axis A. In the illustrated embodiment, angle θ' is 20° and angle θ" is 17°. The surfaces 25b and 25d define, with the surface portions 33 and 35 of the tip 27, flutes that can facilitate removal of chips formed when machining a workpiece. The surfaces 25b and 25d merge with the clearance surface portions 41 and 43 of the surface portions 33 and 35.

As seen in FIG. 1B, the at least four surfaces 25a-25d are ordinarily formed so that, when the tool 21 is viewed along the longitudinal axis A, the surfaces 25a and 25c form a larger arc at the outer circumference of the body 23 than the surfaces 25b and 25d. In the illustrated embodiment, the surfaces 25a and 25c each define an arc of 100° and the surfaces 25b and 25d each define an arc of 80°. This is represented by the offset angle Φ in FIG. 1B. The longitudinal intersections of the surfaces 25a-25d define corners 45 that ordinarily all extend the same distance along the axis A from the end 47 of the tip 27. A presently axial distance of the ends of the corners 45 from the end 47 of the tip 27 is 7.95 mm.

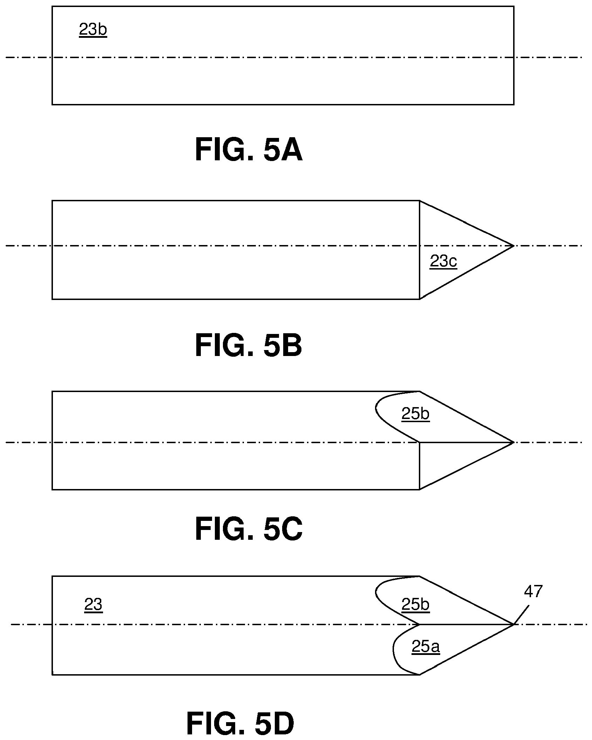

A method of making a rotary cutting tool 21 according to an aspect of the present invention is seen in FIGS. 5A-5D. Usually starting from a cylindrical blank 23b as seen in FIG. 5A, an end of the blank 23b can be formed into a cone 23c as seen in FIG. 5B to facilitate subsequent grinding of the surfaces 25a-25b. The surfaces 25a-25d are formed on the cylindrical body 23 so that each of the surfaces forms an angle with the longitudinal axis A of the body. FIG. 5C shows the flat surface 25b (or 25d) being formed first, followed by the flat surface 25a (or 25c) being formed in FIG. 5D, however, the order of formation of the surfaces can be reversed. The surfaces 25a-25d are typically formed by grinding, however, they may be formed by other suitable techniques, such as pressing and sintering. When the surfaces 25a-25d are formed, they ordinarily extend to the end 47 of the body 23 as seen in FIG. 5D. The surfaces 25a-25d can meet at a point but, more typically, they meet at a small area remaining from the original top of the cone 23c or blank 23b, which can make forming of the tip 27 easier as less material may have to be removed when forming the tip.

After the surfaces 25a-25d are formed, the cutting tip 27 as seen, for example, in FIGS. 2A-2C, 3B, and 4B, centered on the longitudinal axis A, is formed so that the at least four surfaces intersect with the tip. The tip 27 defines at least two cutting edges 29 and 31. The cutting tip 27 is ordinarily formed by grinding, ordinarily by a five-axis grinding operation, however, the tip may be made by other means, such as by pressing and sintering. The tip 27 is formed to define at least two surface portions 33 and 35. The at least two surface portions 33 and 35 meet at the forward-most end of the tip 27 at the end 47 of the body and define the at least two cutting edges. The tip 27 is formed so that at least parts of the at least two cutting edges 29 and 31 are curved. Ordinarily, a radius is formed at the tip by grinding "over-zero", i.e., over the longitudinal axis A of the body 23.

## Claims

1. A rotary cutting tool (21), comprising:
a generally cylindrical body (23),
at least four substantially flat surfaces (25a-25d) that each form an angle with a longitudinal axis (A) of the body (23), and
a cutting tip (27) centered on the longitudinal axis (A), the at least four flat surfaces (25a-25b) intersecting with the tip (27),
**characterized in that** the tip (27) defines at least two cutting edges (29, 31),
at least parts of the at least two cutting edges (29, 31) are curved, and **in that**
the at least two cutting edges (29, 31) define a radially negative rake angle and an axially negative rake angle.

2. The rotary cutting tool (21) as set forth in claim 1, wherein the tip (27) includes a surface (33, 35) having a non-zero area.

3. The rotary cutting tool (21) as set forth in any of claims 1-2, wherein the tip (27) comprises an at least partially convex surface (33, 35).

4. The rotary cutting tool (21) as set forth in any of claims 1-3, wherein the tip (27) comprises at least two surface portions (33, 35), the at least two surface portions (33, 35) meeting at a forward-most end (47) of the tip (27) and defining the at least two cutting edges (29, 31).

5. The rotary cutting tool (21) as set forth in any of claims 1-4, wherein at least parts of the at least two cutting edges (29, 31) are radiused.

6. The rotary cutting tool (21) as set forth in any of claims 1-5, wherein the at least two cutting edges (29, 31) meet at the longitudinal axis (A) of the body (23).

7. The rotary cutting tool (21) as set forth in any of claims 1-6, wherein the at least two cutting edges (29, 31) are rotationally symmetrical and/or identical on opposite sides of the longitudinal axis (A).

8. The rotary cutting tool (21) as set forth in any of claims 1-7, wherein at least two non-consecutive ones (25b, 25d) of the at least four flat surfaces (25a-25b) form smaller angles with the longitudinal axis (A) than at least two other non-consecutive ones (25a, 25c) of the at least four flat surfaces (25a-25b).

9. The rotary cutting tool (21) as set forth in any of claims 1-8, wherein a width of the body (23) is between 3 and 6 mm.

10. The rotary cutting tool (21) as set forth in any of claims 1-9, wherein the body (23) is circularly cylindrical.

11. A method of making a rotary cutting tool (21), comprising:
forming on a cylindrical body (23) at least four substantially flat surfaces (25a-25d) that each form an angle with a longitudinal axis (A) of the body (23), and
forming a cutting tip (27) centered on the longitudinal axis (A), the at least four flat surfaces (25a-25b) intersecting with the tip (27),
**characterized in that** the tip (27) defines at least two, curved cutting edges (29, 31) and **in that** the at least two cutting edges (29, 31) define a radially negative rake angle and an axially negative rake angle.

12. The method as set forth in claim 11, wherein the at least four substantially flat surfaces (25a-25d) are first formed and extend to an end of the body (23), and the tip (27) is thereafter formed by shaping portions of the four substantially flat surfaces (25a-25d) at the end of the body (23).

13. The method as set forth in any of claims 11-12, wherein the tip (27) is formed to define at least two surface portions (33, 35), the at least two surface portions (33, 35) meeting at a forward-most end (47) of the tip (27) and defining the at least two cutting edges (29, 31).

14. The method as set forth in any of claims 11-13, wherein the tip (27) is formed so that at least parts of the at least two cutting edges (29, 31) are radiused.

## Patentansprüche

1. Drehbares Schneidwerkzeug (21), welches aufweist:
einen in etwa zylindrischen Körper (23),
zumindest vier im Wesentlichen ebene Flächen (25a-25d), die jeweils einen Winkel mit der Längsachse (A) des Körpers (23) einschließen, und
eine Schneidspitze (27), die bezüglich der Längsachse (A) zentriert ist, wobei die zumindest vier ebenen Flächen (25a-25b) sich an der Spitze (27) schneiden,
**dadurch gekennzeichnet, dass** die Spitze (27) zumindest zwei Schneidkanten (29, 31) definiert, wobei zumindest Teile der zumindest zwei Schneidkanten (29, 31) gekrümmt sind, und dass die zumindest zwei Schneidkanten (29, 31) einen negativen radialen Spanwinkel und einen negativen axialen Spanwinkel definieren.

2. Drehbares Schneidwerkzeug (21) nach Anspruch 1, wobei die Spitze (27) eine Fläche (33, 35) umfasst, die eine nicht verschwindenden Flächeninhalt aufweist.

3. Drehbares Schneidwerkzeug (21) nach einem der Ansprüche 1 oder 2, wobei die Spitze (27) eine zumindest teilweise konvexe Oberfläche (33, 35) aufweist.

4. Drehbares Schneidwerkzeug (21) nach einem der Ansprüche 1 bis 3, wobei die Spitze (27) zumindest zwei Flächenbereiche (33, 35) aufweist, wobei die zumindest zwei Flächenbereiche (33, 35) sich an dem am weitesten vorn liegenden Ende (47) der Spitze (27) treffen und die zumindest zwei Schneidkanten (29, 31) definieren.

5. Drehbares Schneidwerkzeug (21) nach einem der Ansprüche 1 bis 4, wobei zumindest Teile der zumindest zwei Schneidkanten (29, 31) gekrümmt verlaufen.

6. Drehbares Schneidwerkzeug (21) nach einem der Ansprüche 1 bis 5, wobei die zumindest zwei Schneidkanten (29, 31) sich an der Längsachse (A) des Körpers (23) treffen.

7. Drehbares Schneidwerkzeug (21) nach einem der Ansprüche 1 bis 6, wobei die zumindest zwei Schneidkanten (29, 31) rotationssymmetrisch und/oder auf gegenüberliegenden Seiten der Längsachse (A) identisch sind.

8. Drehbares Schneidwerkzeug (21) nach einem der Ansprüche 1 bis 7, wobei zumindest zwei nicht aufeinanderfolgende (25b, 25d) der zumindest vier ebenen Flächen (25a-25b) kleinere Winkel mit der Längsachse (A) einschließen als die anderen beiden nicht aufeinander folgenden (25a, 25c) der zumindest vier ebenen Flächen (25a, 25b).

9. Drehbares Schneidwerkzeug (21) nach einem der Ansprüche 1 bis 8, wobei die Breite des Körpers (23) zwischen 3 und 6 mm liegt.

10. Drehbares Schneidwerkzeug (21) nach einem der Ansprüche 1 bis 9, wobei der Körper (23) kreisförmig zylindrisch ist.

11. Verfahren zum Herstellen eines drehbaren Schneidwerkzeuges (21), welches aufweist:
Herstellen von zumindest vier im Wesentlichen ebenen Flächen (25a-25d) an einem zylindrischen Körper (23), welche jeweils einen Winkel mit der Längsachse (A) des Körpers (23) einschließen, und
Ausbilden einer Schneidspitze (27), die bezüglich der Längsachse (A) zentriert ist, wobei die zumindest vier ebenen Flächen (25a, 25b) sich mit der Spitze (27) schneiden,
**dadurch gekennzeichnet, dass** die Spitze (27) zumindest zwei gekrümmte Schneidkanten (29, 31) definiert, und dass die zumindest zwei Schneidkanten (29, 31) einen negativen radialen Spanwinkel und einen negativen axialen Spanwinkel definieren.

12. Verfahren nach Anspruch 11, wobei die zumindest vier im Wesentlichen ebenen Flächen (25a-25d) zunächst ausgebildet werden und sich zu einem Ende des Körpers (23) erstrecken, und die Spitze daraufhin ausgebildet wird durch Ausbilden von Teilen der vier im Wesentlichen ebenen Flächen (25a-25d) an dem Ende des Körpers (23).

13. Verfahren nach einem der Ansprüche 11 oder 12, wobei die Spitze (27) so ausgebildet ist, dass sie zumindest zwei Flächenbereiche (33, 35) definiert, wobei die zumindest zwei Flächenbereiche (33, 35) sich an dem am weitesten vorn gelegenen Ende (47) der Spitze (27) treffen und die zumindest zwei Schneidkanten (29, 31) definieren.

14. Verfahren nach einem der Ansprüche 11 bis 13, wobei die Spitze (27) so ausgebildet ist, dass zumindest Teile der zumindest zwei Schneidkanten (29, 31) mit einem Radius gekrümmt verlaufen.

## Revendications

1. Outil de coupe rotatif (21), comprenant :
un corps globalement cylindrique (23),
au moins quatre surfaces sensiblement planes (25a-25d) qui forment chacune un certain angle avec un axe longitudinal (A) du corps (23), et
une pointe de coupe (27) centrée sur l'axe longitudinal (A), les au moins quatre surfaces planes (25a-25d) croisant la pointe (27),
**caractérisé en ce que** la pointe (27) définit au moins deux arêtes de coupe (29, 31), au moins des parties des au moins deux arêtes de coupe (29, 31) sont incurvées, et **en ce que** les au moins deux arêtes de coupe (29, 31) définissent un angle d'attaque radialement négatif et un angle d'attaque axialement négatif.

2. Outil de coupe rotatif (21) selon la revendication 1, dans lequel la pointe (27) inclut une surface (33, 35) ayant une aire non nulle.

3. Outil de coupe rotatif (21) selon l'une quelconque des revendications 1 et 2, dans lequel la pointe (27) comprend une surface au moins partiellement convexe (33, 35).

4. Outil de coupe rotatif (21) selon l'une quelconque des revendications 1 à 3, dans lequel la pointe (27) comprend au moins deux parties de surface (33, 35), les au moins deux parties de surface (33, 35) se rencontrant au niveau d'une extrémité la plus à l'avant (47) de la pointe (27) et définissant les au moins deux arêtes de coupe (29, 31).

5. Outil de coupe rotatif (21) selon l'une quelconque des revendications 1 à 4, dans lequel au moins des parties des au moins deux arêtes de coupe (29, 31) sont arrondies.

6. Outil de coupe rotatif (21) selon l'une quelconque des revendications 1 à 5, dans lequel les au moins deux arêtes de coupe (29, 31) se rencontrent au niveau de l'axe longitudinal (A) du corps (23).

7. Outil de coupe rotatif (21) selon l'une quelconque des revendications 1 à 6, dans lequel les au moins deux arêtes de coupe (29, 31) sont symétriques par rapport à l'axe de rotation et/ou identiques sur des côtés opposés de l'axe longitudinal (A).

8. Outil de coupe rotatif (21) selon l'une quelconque des revendications 1 à 7, dans lequel au moins deux surfaces non consécutives (25b, 25d) parmi les au moins quatre surfaces planes (25a-25d) forment des angles plus petits avec l'axe longitudinal (A) que les au moins deux autres surfaces non consécutives (25a, 25c) parmi les au moins quatre surfaces planes (25a-25d).

9. Outil de coupe rotatif (21) selon l'une quelconque des revendications 1 à 8, dans lequel une largeur du corps (23) est comprise entre 3 et 6 mm.

10. Outil de coupe rotatif (21) selon l'une quelconque des revendications 1 à 9, dans lequel le corps (23) est cylindrique circulaire.

11. Procédé de fabrication d'un outil de coupe rotatif (21), comprenant les étapes consistant à :
former sur un corps cylindrique (23) au moins quatre surfaces sensiblement planes (25a-25d) qui forment chacune un certain angle avec un axe longitudinal (A) du corps (23), et
former une pointe de coupe (27) centrée sur l'axe longitudinal (A), les au moins quatre surfaces planes (25a-25d) se croisant au niveau de la pointe (27),
**caractérisé en ce que** la pointe (27) définit au moins deux arêtes de coupe incurvées (29, 31) et **en ce que** les au moins deux arêtes de coupe (29, 31) définissent un angle d'attaque radialement négatif et un angle d'attaque axialement négatif.

12. Procédé selon la revendication 11, dans lequel les au moins quatre surfaces sensiblement planes (25a-25d) sont formées en premier et s'étendent vers une extrémité du corps (23), et la pointe (27) est ensuite formée en façonnant des parties des quatre surfaces sensiblement planes (25a-25d) au niveau de l'extrémité du corps (23).

13. Procédé selon l'une quelconque des revendications 11 et 12, dans lequel la pointe (27) est formée de sorte à définir au moins deux parties de surface (33, 35), les au moins deux parties de surface (33, 35) se rencontrant au niveau d'une extrémité la plus à l'avant (47) de la pointe (27) et définissant les au moins deux arêtes de coupe (29, 31).

14. Procédé selon l'une quelconque des revendications 11 à 13, dans lequel la pointe (27) est formée de sorte à ce que au moins des parties des au moins deux arêtes de coupe (29, 31) sont arrondies.
